# EUROPEAN PATENT APPLICATION

(11) **EP 4 826 971 A1**
(43) Date of publication of application: **21.10.2026**
(21) Application number: 25855376.7
(22) Date of filing: 05.08.2025
(51) Int. Cl.: H02K 11/30, B25B 11/02, B25B 27/14, H02K 5/04, H02K 5/10, H02K 5/22, F04B 17/03

(54) **INTEGRATED ELECTRIC MOTOR PUMP ASSEMBLY AND ASSEMBLY METHOD THEREFOR**

(30) Priority: 25.02.2025 CN 202510208745
(71) Applicant: Nanjing Weifu Jinning Co., Ltd, Nanjing, Jiangsu 210038 (CN)
(72) Inventor: WU, Guowei, Nanjing, Jiangsu 210038 (CN); HE, Bin, Nanjing, Jiangsu 210038 (CN); HU, Binbin, Nanjing, Jiangsu 210038 (CN); GONG, Songqing, Nanjing, Jiangsu 210038 (CN); WU, Chu, Nanjing, Jiangsu 210038 (CN)
(74) Representative: Bayramoglu et al.
(86) International application number: PCT/CN2025/112590
(87) International publication number: WO 2026/179069

(57) **Abstract**

The present disclosure provides an integrated motor pump unit (MPU) and an assembly method thereof. The integrated MPU includes a motor controller, a motor controller housing, a first motor housing, and a second motor housing, where a first motor is mounted in the first motor housing; a second motor is mounted in the second motor housing; a motor controller mounting cavity is formed in the motor controller housing; a bottom of the motor controller housing is provided with two mounting surfaces that are independent from each other and are arranged side by side; the two mounting surfaces are respectively a first mounting surface and a second mounting surface; a third mounting surface is provided on the first motor housing; the first motor housing is hermetically assembled on the first mounting surface at one side of the bottom of the motor controller housing through the third mounting surface; a fourth mounting surface is provided on the second motor housing; the second motor housing is hermetically assembled on the second mounting surface at the other side of the bottom of the motor controller housing through the fourth mounting surface; and the motor controller is mounted in the motor controller mounting cavity, and is electrically connected to the first motor and the second motor.

## Description

### TECHNICAL FIELD

The present disclosure relates to the technical field of motor pumps, and in particular, to an integrated motor pump unit (MPU) and an assembly method thereof.

### BACKGROUND TECHNOLOGY

Motor pumps are primarily applied to automotive active suspension systems, and feature high integration, compact spatial dimensions, a simple structure, excellent sealing performance, easy assembly and disassembly, adaptability to repeated assembly and disassembly, and others. A housing of an MPU typically includes two motor housings and a controller housing mounted on the top of the two motor housings. The controller housing and the two motor housings are bonded with a sealant and connected by bolts. The two motor housings are bonded to each other with the sealant. That is, sealing among three housings of the MPU is primarily achieved by means of the sealant.

Alternatively, the controller housing and the two motor housings are fixed by a plurality of bolts and sealed by a sealing gasket. However, this configuration leads to complex mold structures and high production costs. In addition, the use of the plurality of bolts for fixation during assembly still poses a risk of sealing failure. Particularly, gaps are easily formed in triangular regions at junctions of horizontal and vertical surfaces, leading to the sealing failure.

Furthermore, regardless of whether the controller housing and the two motor housings are bonded with the sealant or fixed by the plurality of bolts and sealed by the sealing gasket, the formed sealing structure is a spatial sealing structure, which results in poor manufacturability.

### CONTENT OF THE INVENTION

In view of the above technical problems, the present disclosure provides an integrated MPU. By optimizing a complex spatial sealing structure to a planar sealing structure, the integrated MPU solves the problem of difficult sealing between an MPU and a controller housing, with better sealing performance, desirable assemblability, higher product quality and lower manufacturing cost.

To achieve the above objective, the present disclosure adopts the following technical solutions:
An integrated MPU includes a motor controller, a motor controller housing, a first motor housing, and a second motor housing, where a first motor is mounted in the first motor housing, and a second motor is mounted in the second motor housing;
a motor controller mounting cavity is formed in the motor controller housing; a bottom of the motor controller housing is provided with two mounting surfaces that are independent from each other and are arranged side by side; and the two mounting surfaces are respectively a first mounting surface and a second mounting surface;
a third mounting surface is provided on the first motor housing, and the first motor housing is hermetically assembled on the first mounting surface at one side of the bottom of the motor controller housing through the third mounting surface;
a fourth mounting surface is provided on the second motor housing, and the second motor housing is hermetically assembled on the second mounting surface at the other side of the bottom of the motor controller housing through the fourth mounting surface; and
the motor controller is mounted in the motor controller mounting cavity, and is electrically connected to the first motor and the second motor.

Beneficial effects: Since two motor mounting ports that communicate with the motor controller mounting cavity and are arranged side by side and independently, namely a first motor mounting port and a second motor mounting port, are formed in the bottom of the motor controller mounting cavity, the present disclosure achieves better sealing performance, desirable assemblability, higher product quality and lower manufacturing cost.

As an optional embodiment, the integrated MPU further includes sealing rings that are respectively a first sealing ring and a second sealing ring; the first sealing ring is mounted between the first mounting surface and the third mounting surface; a first sealing groove is formed in the third mounting surface of the first motor housing; and the first sealing ring is mounted in the first sealing groove; and
the second sealing ring is mounted between the second mounting surface and the fourth mounting surface; a second sealing groove is formed in the fourth mounting surface of the second motor housing; and the second sealing ring is mounted in the second sealing groove.

Beneficial effects: By designing the complex spatial sealing structure as the simple planar sealing structure, this embodiment enhances the sealing effect. In this embodiment, the sealing groove that is highly mature and reliable in the art is preferably formed in the motor housing, and sealed by the sealing ring, ensuring a reliable planar sealed connection between the motor housing and the motor controller housing.

As an optional embodiment, a first threaded hole is formed in the third mounting surface of the first motor housing; a first through hole corresponding to the first threaded hole is formed in the motor controller housing; the integrated MPU further includes a first connecting bolt; and the first connecting bolt is threadedly connected to the first threaded hole through the first through hole; and
a second threaded hole is formed in the fourth mounting surface of the second motor housing; a second through hole corresponding to the second threaded hole is formed in the motor controller housing; the integrated MPU further includes a second connecting bolt; and the second connecting bolt is threadedly connected to the second threaded hole through the second through hole.

Beneficial effects: In this embodiment, the motor housing and the motor controller housing are preferably fastened through the bolt that is highly mature and reliable in the art, and sealed by a sealing member, ensuring a reliable fixed connection between the motor housing and the motor controller housing.

In an optional embodiment, a fifth mounting surface is further provided on the first motor housing, and the fifth mounting surface is configured to mount and connect a first hydraulic pump;
a sixth mounting surface is provided on the second motor housing, and the sixth mounting surface is configured to mount and connect a second hydraulic pump; and
each of the fifth mounting surface and the sixth mounting surface is provided with a circular mounting hole that is configured to coaxially locate a motor and a hydraulic pump.

Beneficial effects: With the circular mounting hole, a center of the hydraulic pump is coaxial with a center of the motor. This ensures that a motor shaft has an aligned center of rotation and rotates flexibly, preventing wear caused by misalignment.

In an optional embodiment, each of the first motor housing and the second motor housing is provided with a third through hole; and by enabling a bolt fastener to pass through the third through hole, the first motor housing and the second motor housing are coaxially and fixedly connected along an axial direction of the motor.

Beneficial effects: In this embodiment, the first motor housing and the second motor housing are connected by the bolt, enhancing the overall rigidity and the free-mode vibration frequency.

In an optional embodiment, a side of the first motor housing adjacent to the second motor housing is provided with a first opening; a seventh mounting surface is provided on the first opening; a side of the second motor housing adjacent to the first motor housing is provided with a second opening; an eighth mounting surface is provided on the second opening; and the seventh mounting surface of the first motor housing is hermetically assembled with the eighth mounting surface of the second motor housing.

Beneficial effects: The opening is provided on a rear end of the motor, and configured to electrically connect a three-phase wire of the motor and the controller, and assemble a speed sensor, optimizing the assembly design, and facilitating automatic assembly. Meanwhile, openings of the two motors are sealed by a single sealing member, lowering the sealing cost.

In an optional embodiment, a heat dissipation structure is provided outside the motor controller housing.

Beneficial effects: The heat dissipation structure can be configured to dissipate heat of a power device of the controller, reducing the overheating risk, prolonging the service life of the controller, and extending the continuous operating time of the controller.

In an optional embodiment, the motor controller housing includes a first motor controller housing body and a second motor controller housing body; the first motor controller housing body is hermetically assembled with motor housings; and the second motor controller housing body is hermetically assembled with the first motor controller housing body.

Beneficial effects: By designing the motor controller housing as a split structure, a printed circuit board (PCB) of the controller assembly can be mounted in the second motor controller housing body, ensuring that a power device in the PCB is closely attached to the motor controller housing, thereby facilitating design of the heat dissipation structure.

The present disclosure further provides an assembly method of the integrated MPU, including following steps:
1) assembling the first hydraulic pump to the first motor to form a first MPU, and assembling the second hydraulic pump to the second motor to form a second MPU;
2) mounting a sealing ring in a sealing groove of the seventh mounting surface on the first motor housing, assembling the eighth mounting surface on the second motor housing to the seventh mounting surface on the first motor housing, and clamping two motors with a fixture, such that mounting surfaces of the two motors are attached to each other;
3) enabling the bolt fastener to pass through the third through hole, such that the first motor housing and the second motor housing are coaxially and fixedly connected along the axial direction of the motor;
4) mounting the first sealing ring on the third mounting surface of the first motor, mounting the second sealing ring on the fourth mounting surface of the second motor, aligning the first mounting surface at the one side of the bottom of the motor controller housing with the third mounting surface on the first motor housing, aligning the second mounting surface at the the other side of the bottom of the motor controller housing with the fourth mounting surface on the second motor housing, and respectively fixing the motor controller housing bodies to the first motor housing and the second motor housing with a bolt; and
5) mounting the motor controller in the motor controller mounting cavity, and tightening the motor controller with a bolt, thereby completing assembly.

### Beneficial effects

In the step 4), the first motor controller housing body is of a planar structure; the motor controller mounting cavity is formed in the second motor controller housing body; the motor controller is fixed in the motor controller mounting cavity of the second motor controller housing body; and the first motor controller housing body and the second motor controller housing body are fixed together to the first motor housing and the second motor housing with a bolt.

Beneficial effects: By designing the motor controller housing as the split structure, the PCB of the controller assembly can be mounted in the second motor controller housing body, ensuring that the power device in the PCB is closely attached to the motor controller housing, thereby facilitating design of the heat dissipation structure.

### DESCRIPTION OF THE DRAWINGS

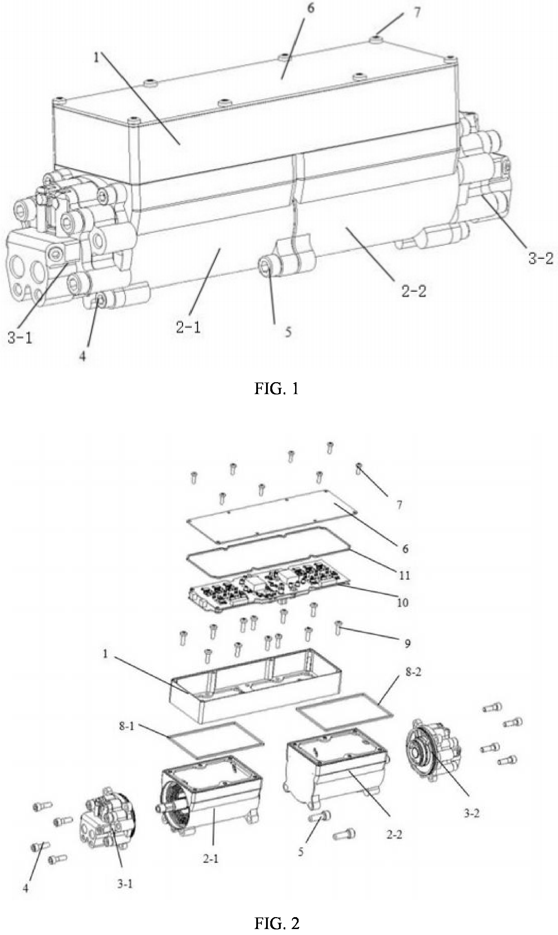

FIG. 1 is a schematic structural view of Embodiment 1 of an integrated MPU according to the present disclosure.
   In the figure: 1: first motor controller housing body, 2-1: first motor housing, 2-2: second motor housing, 3-1: first hydraulic pump, 3-2: second hydraulic pump, 4: hydraulic pump bolt, 5: motor bolt, 6: second motor controller housing body, 7: second motor controller housing body fixing bolt, 8-1: first sealing ring, 8-2: second sealing ring, 9: hexagon socket bolt, 10: controller PCB, and 11: fourth sealing ring;
FIG. 2 is an exploded view of FIG. 1.
FIG. 3 is a schematic structural view of a motor controller housing in FIG. 1.
   In the figure: 1-1: first mounting surface, 1-2: second mounting surface, 1-3: first through hole, and 1-4: third threaded hole.
FIG. 4 is a schematic structural view of a motor in FIG. 1.
   In the figure: 2-1-1: third mounting surface, 2-1-2: first sealing groove, 2-1-3: first threaded hole, 2-1-4: first wire outlet, 2-1-5: second wire outlet, 2-1-6: fifth mounting surface, 2-1-7: motor shaft, 2-1-8: fourth threaded hole, and 2-1-9: third through hole.
FIG. 5 is a schematic structural view of a first sealing ring and a second sealing ring.
FIG. 6 is a structural exploded view of Embodiment 2 of an integrated MPU according to the present disclosure.
   In the figure: 12: third sealing ring.
FIG. 7 is an improved structural exploded view of Embodiment 2 of an integrated MPU according to the present disclosure.
FIG. 8 is another improved structural exploded view of Embodiment 2 of an integrated MPU according to the present disclosure.

### SPECIFIC IMPLEMENTATIONS

Technical solutions of the present disclosure are described in further detail below in combination with specific embodiments and accompanying drawings so as to enable those skilled in the art to better understand and implement the present disclosure, and the illustrated embodiments should not be construed as any limitation to the present disclosure.

### Embodiment 1

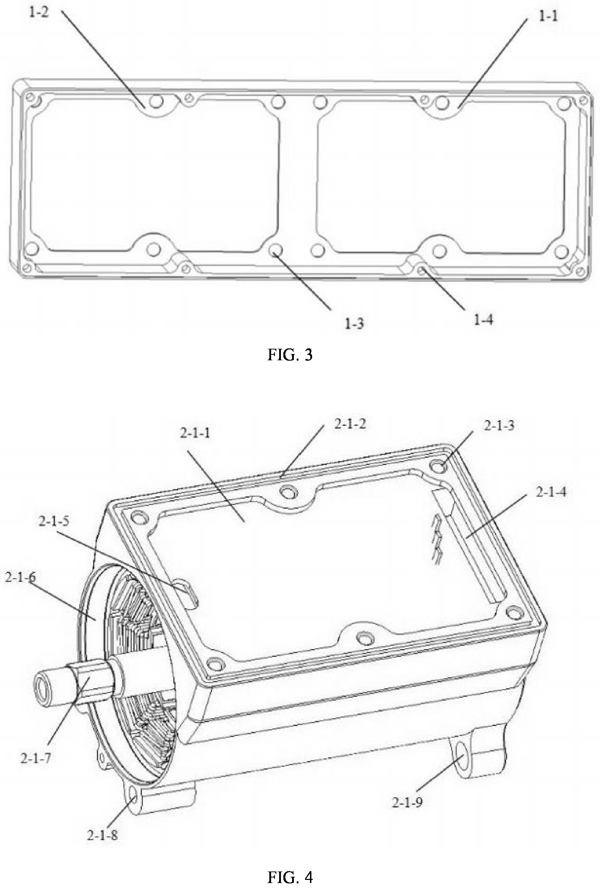

As shown in FIGS. 1-5, an integrated MPU includes motor controller 1, a motor controller housing, first motor housing 2-1, and second motor housing 2-2. A first motor is mounted in the first motor housing 2-1. A second motor is mounted in the second motor housing 2-2.

A motor controller mounting cavity is formed in the motor controller housing. A bottom of the motor controller housing is provided with two mounting surfaces that are independent from each other and are arranged side by side. The two mounting surfaces are respectively a first mounting surface and a second mounting surface.

A third mounting surface is provided on the first motor housing 2-1. The first motor housing 2-1 is hermetically assembled on the first mounting surface at one side of the bottom of the motor controller housing through the third mounting surface.

A fourth mounting surface is provided on the second motor housing 2-2. The second motor housing 2-2 is hermetically assembled on the second mounting surface at the other side of the bottom of the motor controller housing through the fourth mounting surface.

The motor controller 1 is mounted in the motor controller mounting cavity, and is electrically connected to the first motor and the second motor.

Since two motor mounting ports that communicate with the motor controller mounting cavity and are arranged side by side and independently, namely a first motor mounting port and a second motor mounting port, are formed in the bottom of the motor controller mounting cavity, the present disclosure achieves better sealing performance, desirable assemblability, higher product quality and lower manufacturing cost.

As a further optimization to the technical solution in Embodiment 1 of the present disclosure, the integrated MPU further includes sealing rings that are respectively first sealing ring 8-1 and second sealing ring 8-2. The first sealing ring is mounted between the first mounting surface 1-1 and the third mounting surface 2-1-1. First sealing groove 2-1-2 is formed in the third mounting surface 2-1-1 of the first motor housing. The first sealing ring is mounted in the first sealing groove.

The second sealing ring is mounted between the second mounting surface 1-2 and the fourth mounting surface. A second sealing groove is formed in the fourth mounting surface of the second motor housing. The second sealing ring is mounted in the second sealing groove.

Certainly, the sealing ring may be replaced with a sealant to enhance the sealing effect.

By designing the complex spatial sealing structure as the simple planar sealing structure, the present disclosure enhances the sealing effect. In this embodiment, the sealing groove that is highly mature and reliable in the art is preferably formed in the motor housing, and sealed by the sealing ring, ensuring a reliable planar sealed connection between the motor housing and the motor controller housing.

As a further optimization to the technical solution in Embodiment 1 of the present disclosure, first threaded hole 2-1-3 is formed in the third mounting surface of the first motor housing. First through hole 1-3 corresponding to the first threaded hole is formed in the motor controller housing. The integrated MPU further includes a first connecting bolt. The first connecting bolt is threadedly connected to the first threaded hole through the first through hole.

A second threaded hole is formed in the fourth mounting surface of the second motor housing. A second through hole corresponding to the second threaded hole is formed in the motor controller housing. The integrated MPU further includes a second connecting bolt. The second connecting bolt is threadedly connected to the second threaded hole through the second through hole.

The motor housing and the motor controller housing are preferably fastened through the bolt that is highly mature and reliable in the art, and sealed by a sealing member, ensuring a reliable fixed connection between the motor housing and the motor controller housing.

As a further optimization to the technical solution in Embodiment 1 of the present disclosure, fifth mounting surface 2-1-6 is further provided on the first motor housing. The fifth mounting surface is configured to mount and connect a first hydraulic pump.

A sixth mounting surface is provided on the second motor housing. The sixth mounting surface is configured to mount and connect a second hydraulic pump.

Each of the fifth mounting surface and the sixth mounting surface is provided with a circular mounting hole that is configured to coaxially locate a motor and a hydraulic pump.

Beneficial effects: With the circular mounting hole, a center of the hydraulic pump is coaxial with a center of the motor. This ensures that a motor shaft has an aligned center of rotation and rotates flexibly, preventing wear caused by misalignment.

As a further optimization to the technical solution in Embodiment 1 of the present disclosure, each of the first motor housing and the second motor housing is provided with third through hole 2-1-9. By enabling a bolt fastener to pass through the third through hole, the first motor housing and the second motor housing are coaxially and fixedly connected along an axial direction of the motor.

The first motor housing and the second motor housing are preferably connected by the bolt, enhancing the overall rigidity and the free-mode vibration frequency.

### Embodiment 2

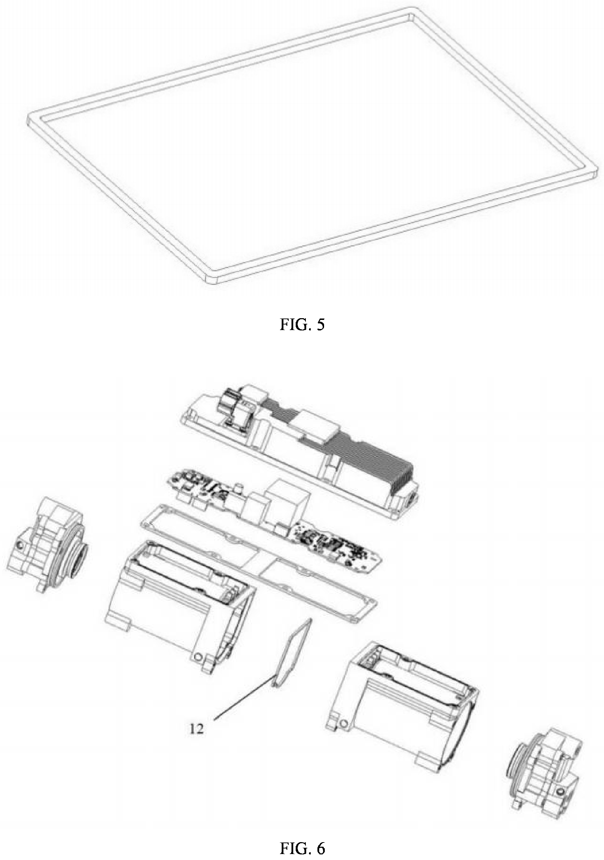

As shown in FIG. 6, this embodiment differs from Embodiment 1 in: A side of the first motor housing adjacent to the second motor housing is provided with a first opening. A seventh mounting surface is provided on the first opening. A side of the second motor housing adjacent to the first motor housing is provided with a second opening. An eighth mounting surface is provided on the second opening. The seventh mounting surface of the first motor housing is hermetically assembled with the eighth mounting surface of the second motor housing.

Beneficial effects: The opening is provided on a rear end of the motor, and configured to electrically connect a three-phase wire of the motor and the controller, and assemble a speed sensor, optimizing the assembly design, and facilitating automatic assembly.

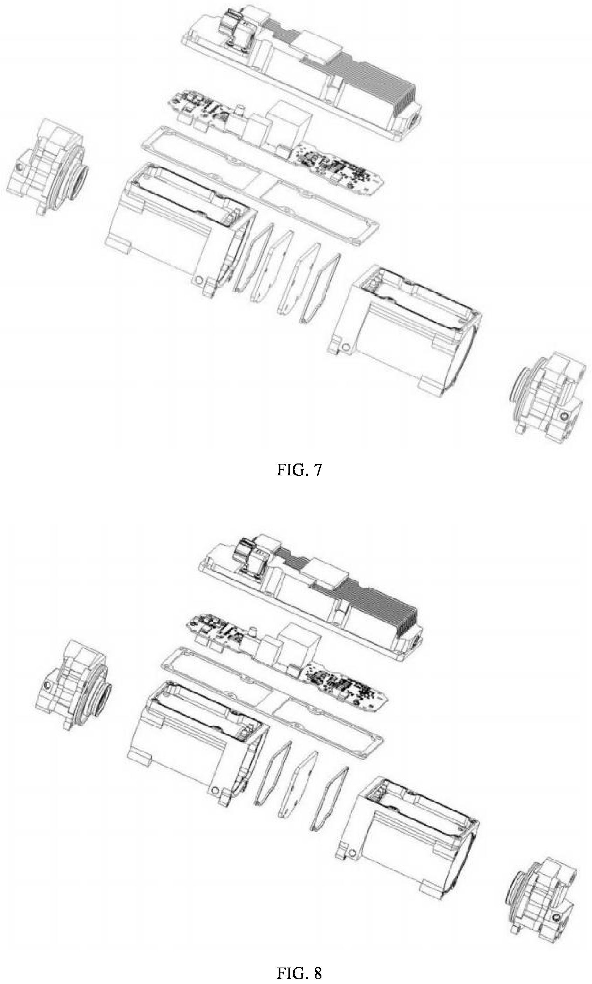

As shown in FIG. 7, as a further optimization to the technical solution in Embodiment 2, a cover plate is removably connected to each of the first opening of the first motor and the second opening of the second motor, so as to independently seal the motor, enhancing the sealing effect.

As shown in FIG. 8, as a further optimization to the technical solution in Embodiment 2, a cover plate is removably connected between the first opening of the first motor and the second opening of the second motor for sealing, reducing the manufacturing cost of the housing.

### Embodiment 3

This embodiment differs from Embodiment 1 and Embodiment 2 in: A heat dissipation structure is provided outside the motor controller housing. It is to be understood that the heat dissipation structure can be configured to dissipate heat of a power device of the controller, reducing the overheating risk, prolonging the service life of the controller, and extending the continuous operating time of the controller.

As a further optimization to the technical solution in Embodiment 3, the motor controller housing includes a first motor controller housing body and a second motor controller housing body. The first motor controller housing body is hermetically assembled with motor housings. The second motor controller housing body is hermetically assembled with the first motor controller housing body.

In this embodiment, by designing the motor controller housing as a split structure, a PCB of the controller assembly can be mounted in the second motor controller housing body, ensuring that the power device in the PCB is closely attached to the motor controller housing, thereby facilitating design of the heat dissipation structure.

The present disclosure further provides an assembly method of the integrated MPU, including following steps:
1) The first hydraulic pump is assembled to the first motor to form a first MPU. The second hydraulic pump is assembled to the second motor to form a second MPU.
2) A sealing ring is mounted in a sealing groove of the seventh mounting surface on the first motor housing. The eighth mounting surface on the second motor housing is assembled to the seventh mounting surface on the first motor housing. Two motors are clamped with a fixture, such that mounting surfaces of the two motors are attached to each other.
3) The bolt fastener passes through the third through hole, such that the first motor housing and the second motor housing are coaxially and fixedly connected along the axial direction of the motor.
4) The first sealing ring is mounted on the third mounting surface of the first motor. The second sealing ring is mounted on the fourth mounting surface of the second motor. The first mounting surface at the one side of the bottom of the motor controller housing is aligned with the third mounting surface on the first motor housing. The second mounting surface at the the other side of the bottom of the motor controller housing is aligned with the fourth mounting surface on the second motor housing. The motor controller housing bodies are respectively fixed to the first motor housing and the second motor housing with a bolt.
5) The motor controller is mounted in the motor controller mounting cavity, and tightened with a bolt, thereby completing assembly.

In the step 4), the first motor controller housing body is of a planar structure. The motor controller mounting cavity is formed in the second motor controller housing body. The motor controller is fixed in the motor controller mounting cavity of the second motor controller housing body. The first motor controller housing body and the second motor controller housing body are fixed together to the first motor housing and the second motor housing with a bolt.

## Claims

1. An integrated motor pump unit (MPU), **characterized by** comprising: a motor controller, a motor controller housing, a first motor housing, and a second motor housing, wherein a first motor is mounted in the first motor housing, and a second motor is mounted in the second motor housing;
a motor controller mounting cavity is formed in the motor controller housing; a bottom of the motor controller housing is provided with two mounting surfaces that are independent from each other and are arranged side by side; and the two mounting surfaces are respectively a first mounting surface and a second mounting surface;
a third mounting surface is provided on the first motor housing, and the first motor housing is hermetically assembled on the first mounting surface at one side of the bottom of the motor controller housing through the third mounting surface;
a fourth mounting surface is provided on the second motor housing, and the second motor housing is hermetically assembled on the second mounting surface at the other side of the bottom of the motor controller housing through the fourth mounting surface; and
the motor controller is mounted in the motor controller mounting cavity, and is electrically connected to the first motor and the second motor.

2. The integrated MPU according to claim 1, **characterized in that** the integrated MPU further comprises sealing rings that are respectively a first sealing ring and a second sealing ring; the first sealing ring is mounted between the first mounting surface and the third mounting surface; a first sealing groove is formed in the third mounting surface of the first motor housing; and the first sealing ring is mounted in the first sealing groove; and
the second sealing ring is mounted between the second mounting surface and the fourth mounting surface; a second sealing groove is formed in the fourth mounting surface of the second motor housing; and the second sealing ring is mounted in the second sealing groove.

3. The integrated MPU according to claim 2, **characterized in that** a first threaded hole is formed in the third mounting surface of the first motor housing; a first through hole corresponding to the first threaded hole is formed in the motor controller housing; the integrated MPU further comprises a first connecting bolt; and the first connecting bolt is threadedly connected to the first threaded hole through the first through hole; and
a second threaded hole is formed in the fourth mounting surface of the second motor housing; a second through hole corresponding to the second threaded hole is formed in the motor controller housing; the integrated MPU further comprises a second connecting bolt; and the second connecting bolt is threadedly connected to the second threaded hole through the second through hole.

4. The integrated MPU according to claim 3, **characterized in that** a fifth mounting surface is further provided on the first motor housing, and the fifth mounting surface is configured to mount and connect a first hydraulic pump;
a sixth mounting surface is provided on the second motor housing, and the sixth mounting surface is configured to mount and connect a second hydraulic pump; and
each of the fifth mounting surface and the sixth mounting surface is provided with a circular mounting hole that is configured to coaxially locate a motor and a hydraulic pump.

5. The integrated MPU according to claim 4, **characterized in that** each of the first motor housing and the second motor housing is provided with a third through hole; and by enabling a bolt fastener to pass through the third through hole, the first motor housing and the second motor housing are coaxially and fixedly connected along an axial direction of the motor.

6. The integrated MPU according to claim 5, **characterized in that** a side of the first motor housing adjacent to the second motor housing is provided with a first opening; a seventh mounting surface is provided on the first opening; a side of the second motor housing adjacent to the first motor housing is provided with a second opening; an eighth mounting surface is provided on the second opening; and the seventh mounting surface of the first motor housing is hermetically assembled with the eighth mounting surface of the second motor housing.

7. The integrated MPU according to claim 6, **characterized in that** a heat dissipation structure is provided outside the motor controller housing.

8. The integrated MPU according to claim 7, **characterized in that** the motor controller housing comprises a first motor controller housing body and a second motor controller housing body; the first motor controller housing body is hermetically assembled with motor housings; and the second motor controller housing body is hermetically assembled with the first motor controller housing body.

9. An assembly method of the integrated MPU according to claim 8, **characterized by** comprising following steps:
1) assembling the first hydraulic pump to the first motor housing to form a first MPU, and assembling the second hydraulic pump to the second motor housing to form a second MPU;
2) mounting a third sealing ring in a sealing groove of the seventh mounting surface on the first motor housing, assembling the eighth mounting surface on the second motor housing to the seventh mounting surface on the first motor housing, and clamping two motor housings with a fixture, such that mounting surfaces of the two motor housings are attached to each other;
3) enabling the bolt fastener to pass through the third through hole, such that the first motor housing and the second motor housing are coaxially and fixedly connected along the axial direction of the motor;
4) mounting the first sealing ring on the third mounting surface of the first motor, mounting the second sealing ring on the fourth mounting surface of the second motor, aligning the first mounting surface at the one side of the bottom of the motor controller housing with the third mounting surface on the first motor housing, aligning the second mounting surface at the the other side of the bottom of the motor controller housing with the fourth mounting surface on the second motor housing, and respectively fixing the motor controller housing bodies to the first motor housing and the second motor housing with a bolt; and
5) mounting the motor controller in the motor controller mounting cavity, and tightening the motor controller with a bolt, thereby completing assembly.

10. The assembly method of the integrated MPU according to claim 9, **characterized in that** in the step 4), the first motor controller housing body is of a planar structure; the motor controller mounting cavity is formed in the second motor controller housing body; the motor controller is fixed on a top of the motor controller mounting cavity of the second motor controller housing body; and the first motor controller housing body and the second motor controller housing body are fixed together to the first motor housing and the second motor housing with a bolt.
